(19) Europäisches Patentamt
European Patent Office
Office européen des brevets

(11) Veröffentlichungsnummer: **0 304 659**
**A2**

(12) # EUROPÄISCHE PATENTANMELDUNG

(21) Anmeldenummer: 88112186.7

(22) Anmeldetag: 28.07.88

(51) Int. Cl.⁴: **A01D 34/46 , A01D 34/54 , A01D 34/62**

(30) Priorität: 22.08.87 DE 3728059

(43) Veröffentlichungstag der Anmeldung:
01.03.89 Patentblatt 89/09

(84) Benannte Vertragsstaaten:
BE DE GB IT NL

(71) Anmelder: GARDENA Kress + Kastner GmbH
Lichternseestrasse 40
D-7900 Ulm/Donau(DE)

(72) Erfinder: Die Erfinder haben auf ihre
Nennung verzichtet

(74) Vertreter: Patentanwälte RUFF, BEIER und
SCHÖNDORF
Neckarstrasse 50
D-7000 Stuttgart 1(DE)

(54) **Rasenmäher.**

(57) Bei einem Rasenmäher (1) weisen die seitlichen, der Lagerung von Laufrädern (6), einer Mähwelle (8), von Stützlaufgliedern (7) sowie eines Schiebegriffes (10) dienenden Gestellwangen (3) eines Fahrgestelles (2) jeweils eine die Rad- und die Mähwellen-Lagerung aufnehmende Lagerwange (4) und einen taschenförmig einen nach hinten abstehenden Lageransatz (17) der Lagerwange (7) aufnehmenden Lagerkörper (5) auf, der zur Höhenverstellung der Mähwelle (8) gegenüber der Lagerwange (4) um die Laufradachse (13) schwenkbar ist. An den Lagerkörpern (5) ist nicht nur das Stützlaufglied (7) gelagert, sondern auch der Schiebegriff (10) um eine Kippachse schwenkbeweglich gehalten, so daß die beim Schieben über den Schiebegriff (10) in das Fahrgestell eingeleitete Kraft stets in derselben Höhenlage gegenüber der Laufebene des Fahrgestelles (2) angreift. Dadurch können bei jeder Höheneinstellung der Mähwelle (8) gleich günstige Laufeigenschaften für den Rasenmäher (1) erhalten werden.

Fig.1

EP 0 304 659 A2

# Rasenmäher

Die Erfindung betrifft einen Rasenmäher mit einer Mähwelle und einem Fahrgestell. Das Fahrgestell kann mindestens eine Gestellwange mit einer Lagerwange für ein Laufrad und einen an dieser verstellbar gehalterten Lagerkörper für mindestens ein in Laufrichtung zum Laufrad benachbartes, gegenüber der Mähwelle höhenverstellbares Stützlaufglied des Fahrgestelles aufweisen.

Bei Rasenmähern dieser Art, bei denen insbesondere die volle Vorschub- bzw. Fahrkraft und ggf. auch der Antrieb der Mähwelle von Hand aufgebracht wird, sind die Lauf- bzw. Fahreigenschaften insofern von der Lage des Kraftangriffspunktes der Vorschubkraft abhängig, als die Höhenlage dieses Kraftangriffspunktes gegenüber der Laufradachse und ggf. auch gegenüber der Mähwelle die Hebelverhältnisse bestimmt, die auf das im wesentlichen einachsige Fahrgestell einwirken. Liegt der Kraftangriffspunkt zu hoch, so kann die Vorschubkraft zu einem Überschlagen des Rasenmähers führen, während eine zu tiefe Lage das leichtgängige Fahren beeinträchtigt. Mit dem Verstellen der Schnitthöhe wird bei den bekannten Rasenmähern zwangsläufig auch eine Verstellung der Höhenlage des Kraftangriffspunktes über der durch die Laufräder und die Stützlaufglieder bestimmten Laufebene bewirkt, so daß sich je nach Einstellung der Schnitthöhe in nachteiliger Weise unterschiedliche Höhenlagen des Kraftangriffspunktes bzw. der zur Laufradachse parallelen Kraftangriffsachse ergeben. Es wird vorgeschlagen, daß ein Schiebegriff zum Führen des Fahrgestelles an der Gestellwange angeordnet ist, der vorzugsweise im wesentlichen höhenkonstant ist.

Der Erfindung liegt auch die Aufgabe zugrunde, einen Rasenmäher der genannten Art zu schaffen, mit welchem auf einfache Weise eine günstige, insbesondere von der Einstellung der Schnitthöhe im wesentlichen unabhängige Lage des Kraftangriffspunktes für die Vorschubgriffe erzielt werden kann.

Zur Lösung dieser Aufgabe ist bei einem Rasenmäher der beschriebenen Art beispielsweise vorgesehen, daß der Schiebegriff an dem Lagerkörper angeordnet ist. Dadurch liegt der Kraftangriffspunkt für den Schiebegriff bei jeder Höheneinstellung des Stützlaufgliedes gegenüber diesem in gleicher Höhenlage, so daß stets etwa dieselben Verhältnisse hinsichtlich der Einleitung der Schiebekraft in das Fahrgestell gegeben sind.

Da die Schiebekraft zweckmäßig in Schieberichtung hinter der Laufradachse in das Fahrgestell eingeleitet wird, kann der Lagerkörper nur auf einer Seite, nämlich in Schieberichtung hinter der Laufradachse liegen, so daß kein um die Laufradachse geschlossen herumgeführter Lagerkörper erforderlich ist. Um trotzdem eine sichere Lagerung zu gewährleisten, ist mindestens eine kulissenartige Führung zwischen dem Lagerkörper und der Lagerwange vorgesehen.

Die Höhenverstellung des Stützlaufgliedes gegenüber der Lagerung der Mähwelle kann zwar entlang einer annähernd linearen, einer von der Kreisform abweichenden gekrümmten oder einer zur Laufradachse exzentrischen Höhenführung erfolgen, jedoch ergibt sich auf einfache Weise eine besonders günstige Höhenverstellung, wenn der Lagerkörper um die Laufradachse verstellbar ist, so daß bei jeder Höhenverstellung der Kraftangriffspunkt des Schiebegriffes dieselbe Höhenlage gegenüber der Laufradachse hat und sich bei der Höhenverstellung eine Änderung der Höhenlage des Kraftangriffspunktes gegenüber der Mähwelle ergibt.

Eine raumsparende, insbesondere in Richtung der Laufradachse nur eine geringe Ausdehnung aufweisende Lagerung zwischen Lagerwange und Lagerkörper ergibt sich, wenn diese im wesentlichen durch plattenförmige, zur Laufradachse rechtwinklige Bauteile gebildet sind, die durch aneinanderliegende Führung auch eine hohe Steifigkeit der Gestellwange bei leichter Bauweise gewährleisten. Eine besonders leichte Bauweise ergibt sich dabei, wenn die plattenförmigen Teile nicht durch Massivkörper, sondern durch Profilkörper gebildet sind, von denen jeweils mindestens eine Außenseite durch eine Wangenplatte begrenzt ist, die durch Profilierung bzw. quer zur Plattenebene abstehende Randzonen versteift ist.

Für die Führung der beiden Wangenteile gegeneinander bzw. für die jeweilige Kulissenführung bedarf es keiner gesonderten Bauteile, wenn die jeweilige Führungsausnehmung unmittelbar in der Lagerwange bzw. deren Wangenplatte vorgesehen und der in ihr geführte Führungskörper beispielsweise durch einen Feststellbolzen zur Feststellung der beiden Wangenteile gegeneinander oder durch das Ende eines über die Innenseite der zugehörigen Wangenplatte des Lagerkörpers vorstehenden Befestigungsgliedes gebildet ist, mit welchem der Führungsgriff vorzugsweise schwenkbar an dem Lagerkörper gehaltert ist. Die Führungsausnehmungen überlappen einander zweckmäßig in Bogenrichtung und liegen in unterschiedlichen Radialabständen zur Laufradachse, wobei die Führungsausnehmung für den Feststellbolzen zweckmäßig weiter entfernt ist und nach unten weiter vorsteht als die andere Führungsausnehmung.

Statt dessen oder zusätzlich hierzu kann die Führung der beiden gegeneinander verstellbaren Wangenteile auch unmittelbar im Bereich einer in der Laufradachse liegenden Lagerschale der Lagerwange vorgesehen sein, wobei diese Lagerschale an der inneren Stirnseite des Laufrades liegt, das mit einem inneren Bund verschlußartig in die gegenüber dem Außendurchmesser des Laufrades einen kleineren Durchmesser aufweisende Lagerschale eingreift. Diese Lagerschale kann am Außenumfang eine an den annähernd ebenen Schalenboden anschließende, sich nur über einen Teilumfang, beispielsweise einen Halbkreis, erstrekkende Umfangsfläche aufweisen, an welcher der Lagerkörper mit einer entsprechenden, vorzugsweise ebenfalls teilkreisförmig gekrümmten Kante so geführt ist, daß er gegen Bewegungen in Richtung zur Laufradachse durch gleitenden Anschlag gesichert ist. Diese Umfangsfläche liegt zweckmäßig unmittelbar benachbart zu der von der Laufradachse abgekehrten Seite des zugehörigen Wellenlagers für die Mähwelle, das ebenfalls im Schalenboden dr Lagerschale befestigt ist.

Die Lagerschale der Lagerwange liegt dadurch im wesentlichen vollständig außerhalb des Lagerkörpers und weist lediglich einen nach hinten abstehenden Lageransatz auf, an welchem der Lagerkörper gelagert ist, und dessen obere und untere Begrenzungskanten etwa tangential von den Umfangsflächen der Lagerschale weg verlaufen. Dieser Lageransatz bildet die Wangenplatte der Lagerwange, die gegenüber dem Schalenboden um die Höhe der Umfangsfläche nach außen versetzt ist, so daß die Innenfläche des Lagerkörpers im wesentlichen in einer Ebene mit der äußeren Stirnfläche des Schalenbodens der Lagerschale liegt.

Um die Schnitthöhe des Rasenmähers besonders einfach einstellen zu können, ist am Lagerkörper und/oder an der Lagerwange mindestens ein Verstellgriff vorgesehen, der zweckmäßig nach Art eines radial vorstehenden Griffes am Umfang der Lagerschale der Lagerwange befestigt ist, so daß der im wesentlichen aus den Lagerwangen mit den Laufrädern, der Mähwelle und Querverbindungen bestehende Fahrwerksteil in einfacher Weise gegenüber dem im wesentlichen aus den Lagerkörpern, dem Stützlaufglied und dem Führungsgriff bestehenden Fahrwerksteil verstellt werden kann. Damit in einfacher Weise die jeweils eingestellte Schnitthöhe erkannt werden kann, ist eine Verstell-Anzeige vorgesehen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zur mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig. 1 einen erfindungsgemäßen Rasenmäher im vertikalen Querschnitt durch die Mähwelle;

Fig. 2 den Rasenmäher gemäß Fig. 1 in teilweise geschnittener Draufsicht;

Fig. 3 den Rasenmäher gemäß den Fig. 1 und 2 in Ansicht von vorne;

Fig. 4 eine geringfügig abgewandelte Ausführungsform in einer Darstellung entsprechend Fig. 1, jedoch ohne Mähwelle.

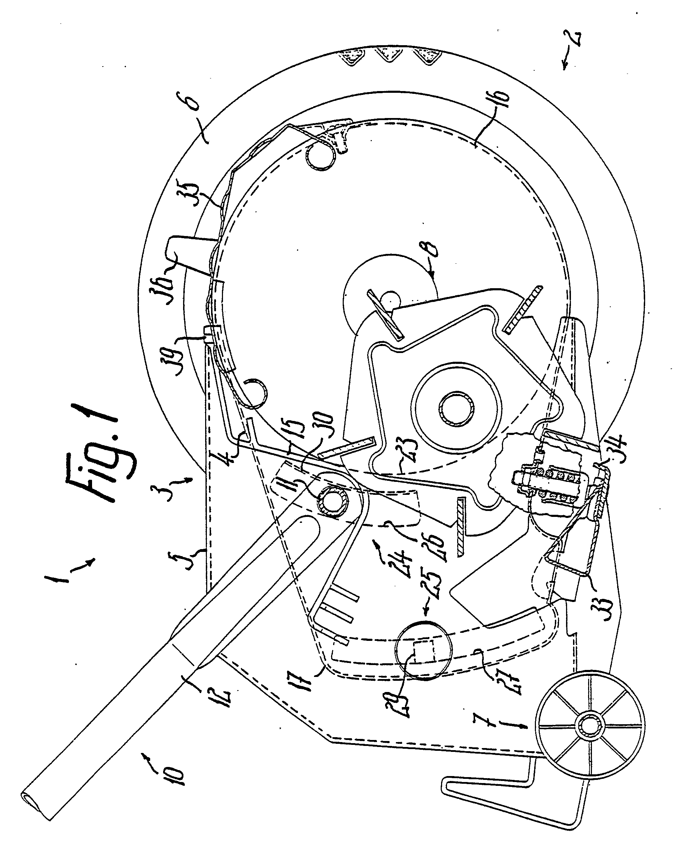

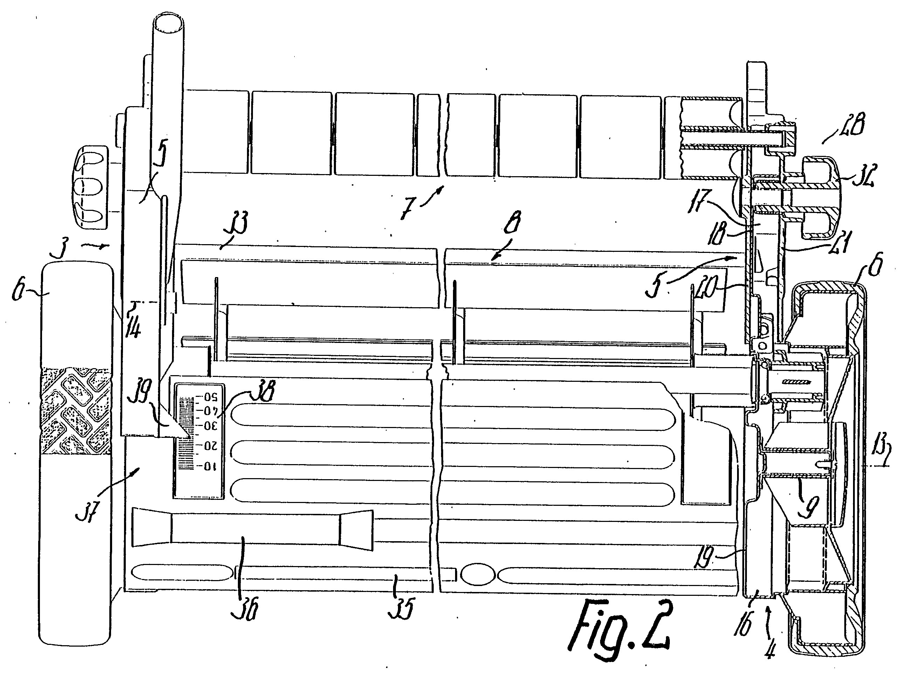

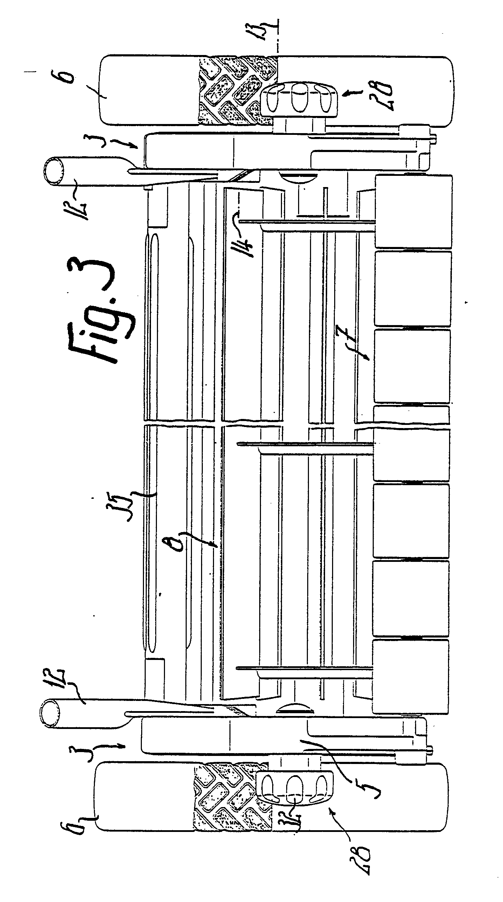

Der Rasenmäher 1 gemäß den Fig. 1 bis 3 weist ein Fahrgestell 2 auf, das im wesentlichen aus zwei untereinander starr verbundenen und etwa im Abstand der Mähbreite einander gegenüberstehenden seitlichen Gestellwangen 3 besteht. Jede der beiden etwa spiegelsymmetrisch ausgebildeten Gestellwangen 3 besteht aus zwei Wangenteilen, nämlich einer Lagerwange 4 und einem an dieser verstellbar und festsetzbar gelagerten, ebenfalls wangenförmigen Lagerkörper 5, wobei die beiden in Fahrtrichtung über die Lagerkörper 5 vorstehenden Lagerwangen 4 zur Lagerung zweier an ihren voneinander abgekehrten Außenseiten in einer gemeinsamen Laufradachse liegenden, das vordere Ende des Fahrgestelles 2 bildenden Laufrädern 6 und die Lagerkörper 5 zur Lagerung mindestens eines im Abstand hinter den Laufrädern 6 liegenden Stützlaufgliedes 7 vorgesehen sind, das zum Beispiel durch eine die Lagerkörper 5 verbindende Querkufe gebildet sein kann, vorzugsweise jedoch durch im Durchmesser gegenüber den Laufrädern 6 wesentlich kleinere, in einer gemeinsamen Achse nebeneinander liegende Stützrollen gebildet ist, die auf einer die beiden Lagerkörper 5 im hinteren, unteren Bereich starr verbindenden gemeinsamen Achsstange gelagert sind. Exzentrisch zur Laufradachse 13 und hinter sowie unter dieser ist in Wellenlagern der Lagerwangen 4 eine zur Laufradachse 13 und zur Rollenachse der Stützlaufglieder 7 parallele Mähwelle 8 drehbar gelagert, die im wesentlichen aus einer Achsstange, an dieser befestigten Tragscheiben und von diesen getragenen Längsmessern besteht, welche annähernd bis zu den einander zugekehrten Innenflächen der Gestellwangen 3 reichen.

An dem Fahrgestell 2 und zwar an beiden Lagerwangen 3, die in Seitenansicht oben, unten und vorne von den mit Radlagern 9 gelagerten Laufrädern 6 überragt werden, ist ein bügelförmiger, schräg nach hinten geneigter Schiebegriff 10 mit Befestigungsgliedern 11 gelagert, der zwei etwa parallele Schenkel und einen diese im Abstand oberhalb des Fahrgestelles 2 verbindenden, nicht näher dargestellten Querholm als Griffstange aufweist. Die Enden der nach Art von Schubstangen wirkenden, aus Rohr hergestellten Griffschenkel 12 sind zu Längsplatten verformt, die mit gesonderten, durch hohle Befestigungsbolzen gebildeten Befestigungsgliedern 11 an den einander zugekehrten Innenseiten der Lagerkörper 5 um eine gemeinsame, zur Laufradachse 13 parallele Kippachse 14 schwenkbar angelenkt sind. Diese Kippachse 14 liegt geringfügig oberhalb der Laufradachse 13 und gegenüber der Mähwellenachse etwa um den halben Flugkreis-Durchmesser der Längsmesser nach hinten in Richtung zum Stützlaufglied 7 versetzt. Zur Begrenzung der Schwenkbeweglichkeit des Schiebegriffes 10 sind an den Innenseiten der Lagerkörper 5 Anschlagschalen 15 derart vorgesehen, daß der maximale Schwenkwinkel des Führungsgriffes 10 höchstens 90° beträgt.

Die jeweilige, durch einen relativ dünnwandigen Körper aus Blech o.dgl. gebildete Lagerwange 4 weist eine gegenüber der Axialerstreckung des jeweiligen Laufrades 6 flachere, zur Innenseite des Laufrades 6 offene und in der Laufradachse 13 liegende Lagerschale 16 auf, von der ein höchstens bis an ihre Stirnflächen-Ebenen reichender, annähernd trapezförmiger Lageransatz 17 einteilig nach hinten absteht, dessen Ansatzflanken auf einem Bogenwinkel von mehr als 90° und weniger als 180° annähernd tangential in die Umfangsfläche der Lagerschale 16 übergehen. Der Lageransatz 17 ist im we sentlichen durch eine an den Boden 19 der Lagerschale 16 anschließende und gegenüber diesem Boden geringfügig nach außen bzw. zur offenen Schalenseite hin versetzte Wangenplatte 18 und einen von dieser nach außen angewinkelt abstehenden Umfangsrand gebildet, der an den Schalenmantel der Lagerschale 16 anschließt und dessen Kante im wesentlichen in einer Ebene mit der Stirnkante der offenen Seite der Lagerschale 16 liegt.

Der jeweilige Lagerkörper 5 ist als flachtaschenförmiges Gehäuse für die Aufnahme des zugehörigen Lageransatzes 17 ausgebildet und weist als Seitenwangen zwei parallele Wangenplatten, nämlich eine Innen-Wangenplatte 20 und eine Außen-Wangenplatte 21 auf, die in Richtung der Laufradachse 13 im wesentlichen spielfrei einerseits an der Wangenplatte 18 und andererseits an der Randkante des Lageransatzes 17 anliegen. Die Wangenplatten 20, 21 sind an der Oberseite, dem hinteren Ende und über einen vorderen und hinteren Teil der Unterseite über streifenförmige Querwände miteinander verbunden, wobei der Lagerkörper 5 als einteiliger Spritzteil aus Kunststoff hergestellt werden kann. Die vorderen Kanten 23 der beiden Wangenplatten 20, 21 sind mit etwa gleichem Radius um die Laufradachse 13 konkav gekrümmt, wobei die Kante 23 der Innen-Wangenplatte 20 am zugehörigen Teilumfang der Lagerschale 16 laufen kann, während die Kante 23 der Außen-Wangenplatte 21 annähernd bis an einen nach innen vorstehenden Ringbund des Laufrades 6 reicht und dadurch gemeinsam mit der Lagerschale 16 den Aufnahmeraum für das Radlager 9 nach außen verschließt. Die Oberseite und die Unterseite des Lagerkörpers 5 liegen etwa parallel zueinander und in einem dem Außendurchmesser der Lagerschale 16 entsprechenden Abstand voneinander, derart, daß sie etwa tangential an den Umfang der Lagerschale 16 anschließen.

Durch die beschriebene Ausbildung ist der Lagerkörper 5 gegenüber der Lagerwange 4 um die Laufradachse 13 über einen vorbestimmten Bogenwinkel von weniger als 45°, insbesondere etwa 30° schwenkbar, wodurch die Höhenlage der Mähwelle 8 gegenüber der Laufebene des Fahrgestelles 2 verändert wird. Zur Sicherung gegen Bewegungen des Lagerkörpers 5 gegenüber der Lagerwange 4 in Richtung von der Laufradachse 13 weg sind zwei, unterschiedliche Radialabstände von der Laufradachse 13 aufweisende und um diese gekrümmte Kulissenführungen zwischen diesen beiden Wangenteilen vorgesehen, wobei eine Kulissenführung nahe benachbart zum Außenumfang der Lagerschale 16 im Bereich des Lageransatzes 17 und die andere Kulissenführung nahe benachbart zu dessen Ende vorgesehen ist.

Die näher bei der Laufradachse 13 liegende, annähernd von der oberen Kante bis zur Mitte der Höhe des Lageransatzes 17 reichende Führung 25 weist in der Wangenplatte 18 eine langlochartig um die Schwenkachse des Lagerkörpers 5 gekrümmte Ausnehmung 26 konstanter Breite auf. Diese Breite ist annähernd gleich der zugehörigen Außenweite des Befestigungsgliedes 11, das die Ausnehmung 26 derart durchsetzt, daß sein Bolzenkopf an der Innenseite des Lagerkörpers 5 bzw. an dem zugehörigen Griffschenkel 12 anliegt, während am davon abgekehrten Ende kein Kopf erforderlich ist, so daß der Griffschenkel 12 durch federndes Nachinnendrücken in einfacher Weise aus seiner Lagerung zum Abnehmen gelöst werden kann. Zur Radialsicherung des Lagerkörpers 5 dient insbesondere die krümmungsäußere Kante der Ausnehmung 26. Die Ausnehmung 26 ist durch einen Stanzbiegeschnitt derart gebildet, daß die krümmungsinnere Begrenzungskante durch eine in Richtung zum Laufrad 6 abgewinkelte, über die Länge der Ausnehmung 26 reichende Lasche gebildet ist, welche eine der Breite der Ausnehmung 26 entsprechende Höhe hat und als Abschirmung 30 zwischen dem Innern der Lagerschale 16 und der Lagerung des Schiebegriffes 10 dient.

Die radial weiter entfernte Führung 25 weist ebenfalls in der Wangenplatte 18 der Lagerwange 14 eine langlochartig um die Schwenkachse des Lagerkörpers 5 gekrümmte Ausnehmung 27 konstanter Breite auf, die annähernd von der oberen bis zur unteren Begrenzung des zugehörigen Endes des Lageransatzes 17 reicht und von einem Spannbolzen einer Feststelleinrichtung 28 durchsetzt ist, dessen Kopf an der Innenseite der Wangenplatte 20 des Lagerkörpers 5 liegt und auf den ein an der Außenseite der Gestellwange liegender und an der Außenseite der Außen-Wangenplatte 21 abgestützter Handschraubkopf 32 aufgeschraubt ist. Für den Eingriff in die Ausnehmung 27 weist der Spannbolzen 31 ein Führungsglied 29 in Form eines Vierkant-Abschnittes auf. Auch hier dient insbesondere die krümmungsäußere Kante der Ausnehmung 27 zur Radialsicherung des Lagerkörpers 5. Mit der Feststelleinrichtung 28 werden die beiden Wangenplatten 20, 21 des Lagerkörpers 5 mit einer infolge der Nachgiebigkeit der Innen-Wangenplatte 20 geringen Federung gegen beide Seiten des Lageransatzes 17 verspannt. Da auch das Führungsglied 29 bzw. die Feststelleinrichtung 28 leicht lösbar ist, kann nach Lösen des Befestigungsgliedes 11 und des Führungsgliedes 29 der die Laufräder 6 aufweisende Fahrgestellteil in einfacher Weise von dem das Stützlaufglied 7 aufweisenden Fahrgestellteil abgenommen werden.

Die Wangenteile des die Laufräder 6 aufweisenden Teiles des Fahrgestelles 2 sind außer durch die Mähwelle 8 auch durch einen nach Art eines Hohlprofiles ausgebildeten Tragholm 33 für ein Gegenmesser 34 und diesem etwa diametral zur Laufradachse gegenüberliegend durch eine Haube 35 miteinander starr verbunden, die den oberen und vorderen Bereich der Mähwelle 8 am Außenumfang abschirmt. Der Tragholm 33 ist durch Einhängen lösbar an dem unteren Rand des Lageransatzes 17 befestigt und trägt das mit den Längsmessern der Mähwelle 8 scherend zusammenwirkende Gegenmesser 34 unterhalb der Mähwelle 8 und gegenüber deren Achse geringfügig nach hinten versetzt. Die Haube 35 ist mit Schrauben lösbar am Rand der Lagerschale 16 befestigt, so daß der Rasenmäher, beispielsweise für den Versand, noch besser zerlegt werden kann. Zu diesem Zweck kann auch die Achsstange des Stützlaufgliedes 7 leicht lösbar an den Lagerkörpern 5, beispielsweise durch Einstecken in ihre Längsrichtung, gehaltert sein. Entsprechend läßt sich auch die Mähwelle 8 von den Gestellwangen 3 lösen. Für den Antrieb der Mähwelle 8 weisen die Enden ihrer Hohlwelle Zahnritzel auf, die in den Laufrädern 6 in Innen-Zahnkränze eingreifen.

An der Oberseite der den Lagerkörper 5 untergreifenden Haube 35 ist vor der Lagerwange 5 ein Verstellgriff 36 befestigt, der etwa radial zur Laufradachse 13 nach oben absteht und in Seitenansicht nicht über den Außendurchmesser des Laufrades 6 vorsteht. Der Verstellgriff 36 liegt unmittelbar oberhalb einer benachbart zur Innenseite des Lagerkörpers 5 an der Oberseite der Haube 35 angeordneten Verstell-Anzeige 37, die aus einer an der Haube vorgesehenen Skala 38 und einem an dem Lagerkörper 5 vorgesehenen Zeiger 39 besteht, der zweckmäßig einteilig mit dem Lagerkörper 5 ausgebildet ist und an dessen oberer vorderer, an die Kante 23 anschließenden Endkante liegt.

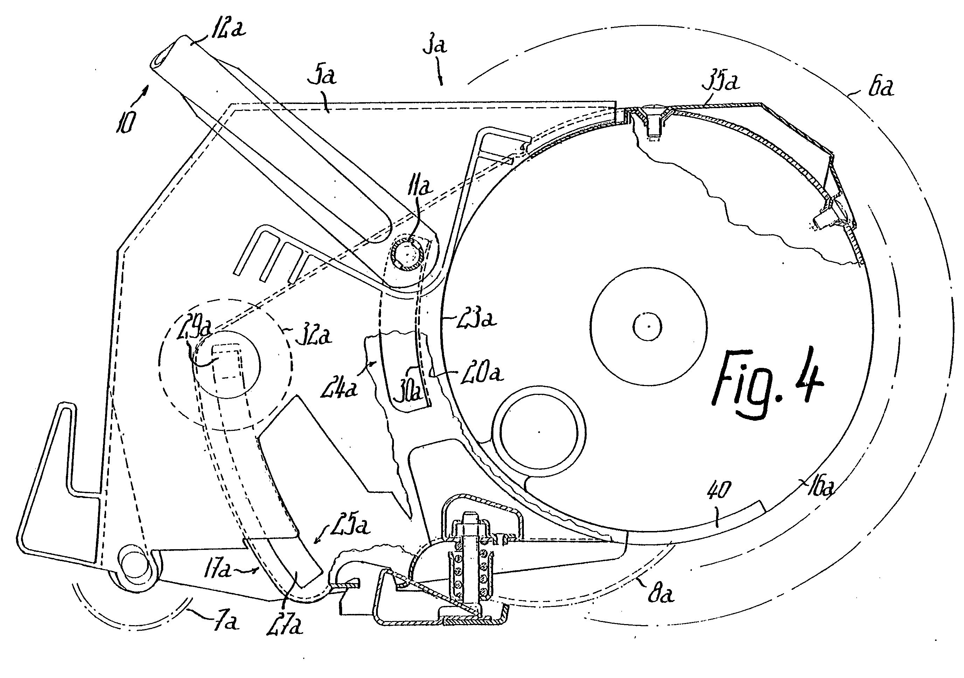

In Fig. 4 sind für einander entsprechende Teile die gleichen Bezugszeichen wie in den Fig. 1 bis 3, jedoch mit dem Index "a" verwendet. Wie Fig. 4 zeigt, kann im Boden der Lagerschale 16 unmittelbar anschließend an den Mantel eine teilkreisförmige Vertiefung in Form einer abgesetzten Ringschulter vorgesehen sein, welche von der Innen-Wangenplatte 20a des Lagerkörpers 5a so übergriffen wird, daß diese Wangenplatte 20a etwa in der Ebene des Schalenbodens liegt und die Kante 23a an bzw. unmittelbar benachbart zur Mantelfläche dieser Vertiefung läuft. Die Vertiefung 40 erstreckt sich über einen Bogenwinkel, der gegenüber demjenigen der Kante 23a um den maximalen Schwenkwinkel des Lagerkörpers 5a grö ßer ist. In Fig. 4 ist die Mähwelle nicht dargestellt und das Laufrad 6a, das Stützlaufglied 7a sowie der Flugkreisdurchmesser der Mähwelle 8a sind nur strichpunktiert angedeutet.

## Ansprüche

1. Rasenmäher mit einer Mähwelle (8) und einem Fahrgestell (2), dadurch gekennzeichnet, daß ein Führungs- bzw. Schiebegriff (10) vorgesehen ist.

2. Rasenmäher, insbesondere nach Anspruch 1, dadurch gekennzeichnet, daß das Fahrgestell (2) mindestens eine Gestellwange (3) mit einer Lagerwange (4) für ein Laufrad (6) und einen an dieser verstellbar gehaltenen Lagerkörper (5) für mindestens ein in Laufrichtung zum Laufrad (6) benachbartes, gegenüber der Mähwelle (8) höhenverstellbares Stützlaufglied (7) des Fahrgestelles (2) aufweist und daß vorzugsweise der an der Gestellwange (3) angeordnete Schiebegriff (10) zum Führen des Fahrgestelles (2) an dem Lagerkörper (5) angeordnet ist.

3. Rasenmäher, insbesondere nach Anspruch 1 oder 2, dadurch gekennzeichnet, daß der Lagerkörper (5) mit einer im wesentlichen auf einer Seite der Laufradachse (13) liegenden Lagerung an der Lagerwange, insbesondere in mindestens einer kulissenartigen Führung (24, 25), gelagert ist, wobei vorzugsweise der Lagerkörper (5) um die Laufradachse (13) schwenkbar an der Lagerwange (4) gelagert, insbesondere in der Lagerwange (4) im Bereich eines Befestigungsgliedes (11) für den Führungsgriff (10) eine der Bewegungsbahn des Befestigungsgliedes (11) angepaßte Ausnehmung (26) vorgesehen ist und vorzugsweise das in festem Höhenabstand zum Stützlaufglied (7) liegende Befestigungsglied (11) für den Schiebegriff (10) mindestens in Höhe der Laufradachse (13), insbesondere geringfügig darüber liegt.

4. Rasenmäher, insbesondere nach einem der vorhergehenden Ansprüche, dadurch gekennzeichnet, daß der Führungsgriff (10) um eine zur Laufradachse (13) etwa parallele Kippachse (14) schwenkbar an dem Lagerkörper (5) gelagert und insbesondere das Befestigungsglied (11) als Lagerbolzen ausgebildet ist, der mit einem Ende in die Ausnehmung (26) der Lagerwange (4) beweglich sowie den Lagerkörper (5) gegenüber der Lagerwange (4) radial sichernd eingreift, wobei vorzugsweise der Schiebegriff (10) durch einen Griffbügel gebildet ist, der mit seinen beiden Bügelschenkeln (12) an den Lagerkörpern (5) zweier an beiden Enden der Mähwelle (8) vorgesehenen Gestellwangen (3) befestigt ist.

5. Rasenmäher, insbesondere nach einem der vorhergehenden Ansprüche, dadurch gekennzeichnet, daß eine Feststelleinrichtung (28) für den Lagerkörper (5) - bezogen auf die Laufrichtung - zwischen dem Befestigungsglied (11) für den Schiebegriff (10) und dem Stützlaufglied (7), insbesondere vom Befestigungsglied (11) weiter ent fernt, vorgesehen ist bzw. tiefer als das Befestigungsglied (11) liegt, wobei vorzugsweise ein Feststellglied der Feststelleinrichtung (28), insbesondere eine Klemmschraube, einen zweiten kreisbogenförmigen Durchbruch in der Lagerwange (4) durchsetzt, der eine kulissenartige Führung (25) bildet.

6. Rasenmäher, insbesondere nach einem der vorhergehenden Ansprüche, dadurch gekennzeichnet, daß die Lagerwange (4) und der Lagerkörper (5) unmittelbar benachbart zueinander liegende Wangenplatten (18, 20) aufweisen, daß der Schiebegriff (10) an der Wangenplatte (20) des Lagerkörpers (5) befestigt und die Führungs-Ausnehmung (26) insbesondere ein kreisbogenförmiger Durchbruch in der Wangenplatte (18) der Lagerwange (4) ist, wobei vorzugsweise das Befestigungsglied (11) für den Schiebegriff (10) bzw. die zugehörige Führungs-Ausnehmung (26) - bezogen auf die Laufrichtung - zwischen der Laufradachse (13) und dem Stützlaufglied (7), insbesondere näher bei der Laufradachse (13), benachbart zu einer Lagerschale (16) für das Laufrad (6) und die Wangenplatte (20) des Lagerkörpers (5) als Innen-Wangenplatte (20) an der Innenseite der Wangenplatte (18) der Lagerwange (4) liegt, der Schiebegriff (10) an der Innenseite der Wangenplatte (20) des Lagerkörpers (5) befestigt ist und der Lagerkörper (5) insbesondere eine an der Außenseite der Lagerwange (4) liegende Außen-Wangenplatte (21) aufweist.

7. Rasenmäher, insbesondere nach einem der vorhergehenden Ansprüche, dadurch gekennzeichnet, daß die Lagerwange (4) einen insbesondere vom Umfang der napfförmigen, an der Innenseite des Laufrades (6) liegenden Lagerschale (16) zum Stützlaufglied (7) abstehenden , insbesondere vom Lagerkörper (5) taschen- bzw. gehäuseartig aufgenommenen Lageransatz (17) aufweist, daß vorzugsweise der Lagerkörper (5) die Laufradachse (13) im Abstand auf einem Teilumfang, insbesondere etwa auf einem Halbkreis umgibt und die Kulissen-Führung bzw. -Führungen (24, 25) in dem Lageransatz (17) vorgesehen sind und daß vorzugsweise die der Laufradachse (13) zugekehrte Wangenkante (23) mindestens einer Wangenplatte (20, 21) des Lagerkörpers (5) um die Laufradachse (13) gekrümmt ist und die Wangenkante (23) der Innen-Wangenplatte (20) an einer durch eine nutartige Vertiefung im Schalenboden der Lagerschale (16) gebildeten Umfangsfläche liegt.

8. Rasenmäher, insbesondere nach einem der vorhergehenden Ansprüche, dadurch gekennzeichnet, daß an wenigstens einem der beiden gegeneinander verstellbaren Wangenteile der Gestellwange (3) ein Verstellgriff (36) vorgesehen ist, der vorzugsweise an einer die beiden Lagerwangen (4) verbindenden Schutzhaube (35) für die Mähwelle (8) befestigt ist.

9. Rasenmäher, insbesondere nach einem der vorhergehenden Ansprüche, gekennzeichnet durch eine Verstell-Anzeige (37) für die gegeneinander verstellbaren Wangenteile, die einen vorzugsweise am Lagerkörper (5) angeordneten Zeiger (39) und eine an der Schutzhaube (35) vorgesehene Verstell-Skala (38) aufweist.

10. Rasenmäher, insbesondere nach einem der vorhergehenden Ansprüche, dadurch gekennzeichnet, daß der Lagerkörper (5) für die Befestigung des Schiebegriffes (10) eine insbesondere in seiner zugehörigen Wangenplatte (20) vorgesehene Bohrung aufweist und daß vorzugsweise die Mähwelle (8) von mindestens einem Laufrad (6) angetrieben und insbesondere gegenüber dem Befestigungsglied (11) für den Schiebegriff (10) tieferliegend an den Lagerwangen (4) gelagert ist.

*Fig.1*

EP 0 304 659 A2

Fig. 2

Fig. 3

Fig.4

EP 0 304 659 A2